# EUROPÄISCHE PATENTSCHRIFT

(11) **EP 0 713 029 B1**
(45) Veröffentlichungstag und Bekanntmachung des Hinweises auf die Patenterteilung: **06.05.1999**
(21) Anmeldenummer: 95108282.5
(22) Anmeldetag: 31.05.1995
(51) Int. Cl.: F16F 9/46

(54) **Proportionalventil**
Proportional valve
Valve proportionelle

(30) Priorität: 18.11.1994 DE 4441047
(43) Veröffentlichungstag der Anmeldung: 22.05.1996
(73) Patentinhaber: Krupp Bilstein GmbH, 58256 Ennepetal (DE)
(72) Erfinder: Schmidt, Klaus, D-51467 Bergisch Gladbach (DE)
(74) Vertreter: John, Ernst

(56) Entgegenhaltungen:
- EP-A- 0 572 040
- DE-A- 1 505 417
- GB-A- 2 170 572
- GB-A- 2 222 227
- US-A- 5 282 645

## Beschreibung

Die Erfindung betrifft ein Proportionalventil für einen hydraulischen Schwingungsdämpfer mit einem in einem Dämpfungszylinder axial verschieblich geführten und mit einer Kolbenstange verbundenen Kolben, wobei der Kolben druckabhängige Dämpfungsventile für einen Austausch von Dämpfungsflüssigkeit in der Zug- und in der Druckstufe aufweist und den Dämpfungszylinder in zwei Arbeitsräume unterteilt, und bei dem Durchtrittskanäle vorhanden sind, durch welche das die Dämpfungsventile beaufschlagende Druckmedium strömt, und wobei der Kolben einen in einem Bypass-Kanalsystem angeordneten und den dort vorhandenen Mediumsdurchfluß drosselnden elektromagnetisch betätigbaren Steuerschieber aufweist, wobei die den Durchtrittskanälen abgewandte Seite des Dämpfungsventiles einen über das Bypass-Kanalsystem mit dem jeweils gegenüberliegenden Arbeitsraum verbundenen Druckraum aufweist, und bei dem der Druckraum federnd gegenüber dem zugehörigen Arbeitsraum abgedichtet ist.

Solche Proportionalventile arbeiten mit einer Vorsteuerung in der Art, daß durch den auf die den Durchtrittskanälen abgewandte Seite des Dämpfungsventiles wirkenden Druck im dort angeordneten Druckraum ein Abheben des Dämpfungsventiles durch den Hauptstrom steuerbar wird. Hierzu wird mit Hilfe eines Bypass-Kanalsystems ein Gegendruck in dem Druckraum aufgebaut, welcher - abgesehen von den durch die eventuell in der Dämpfungsventilscheibe oder im zugehörigen Auflagerand vorhandenen Konstantdurchflüssen - erst zu einem vorbestimmten Betriebszustand den auftretenden Hauptstrom freigibt.

Ein solches Proportionalventil ist in der DE 33 48 176 C2 offenbart, bei der die Dämpfungsventilscheiben über einen Stützkörper 38 durch einen in einer Beaufschlagungskammer 40 vorhandenen Steuerdruck beaufschlagbar sind. Dieser Steuerdruck wird über ein Bypass-Kanalsystem aufgebracht, welches mit Hilfe eines zusätzlichen Scheibenventiles 45 verschlossen oder geöffnet bzw. in seinem Mediumsdurchfluß gedrosselt werden kann.

Nachteilig bei der hier gezeigten Ausbildung ist zum einen die lediglich einseitige Ausbildung einer Vorsteuerung mit einem nur für eine Seite wirksamen elektromagnetisch steuerbaren Ventil, als auch die Ausbildung der Druckbeaufschlagungskammer vollständig innerhalb des Kolbenkörpers mit lediglich einer durch ein weiteres Stützelement verschließbaren Seite.

Dieser Aufbau ist bereits für die dargestellte einseitige Ausbildung kompliziert und fertigungstechnisch nur schwer zu handhaben, was den Gedanken einer eventuell doppelseitigen Ausbildung mit entgegengesetzt wirkenden Beaufschlagungskammern nicht sinnvoll erscheinen läßt.

Zudem sind eine Reihe von zusätzlichen, im Kolbenkörper verlaufenden Bypassbohrungen notwendig und auch eine Ausnehmung bzw. Bohrung innerhalb der Dämpfungsventilscheibe, welche für einen ungehinderten Durchtritt des zur Steuerung nötigen Volumenanteiles erforderlich wird.

Ein weiterer Nachteil ergibt sich in der Zusammenfassung der Funktionen des Absperrventiles und des Steuerventiles durch die genannte Ventilscheibe 45. Hierdurch wird das Entstehen von Unstetigkeiten im Volumenstrom, z.B. durch Flattern des Ventiles, insbesondere bei hochfrequenten und in der Amplitude niedrigen Schwingungen begünstigt.

Der Erfindung lag also die Aufgabe zugrunde, ein Proportionalventil mit einer Vorsteuerung bereitzustellen, welches nicht nur doppelseitig wirksam und steuerbar ist, sondern welches insbesondere in der Fertigung und in der Herstellung durch eine möglichst einfache Bauweise leicht zu handhaben ist und jegliche Unstetigkeiten in der Bypass-Strömung durch exakte Definition der Strömungsquerschnitte vermeiden kann.

Gelöst wird diese Aufgabe durch die Merkmale des Hauptanspruchs. Vorteilhafte Ausbildungen sind in den Unteransprüchen erfaßt.

Hierbei wird der Druckraum durch die Dämpfungsventilscheibe durch ein zur federnden Abdichtung gegenüber dem zugehörigen Arbeitsraum dienendes elastisches Element und durch die die Mündungsöffnungen des Bypass-Kanalsystems enthaltenden Wandungsteilen des Kolbenkörpers und / oder von Kolbeneinsatzringen begrenzt, wobei das elastische Element des zum jeweils gegenüberliegenden Arbeitsraum gehörigen Druckraumes durch einen im gegenüberliegenden Arbeitsraum auftretenden Mediumsdruck geöffnet wird.

Durch eine solche Ausbildung des Druckraumes und der Dämpfungsventilscheiben in Kombination mit den elastischen Elementen zur federnden Abdichtung erreicht man nicht nur einen sehr einfachen Kolbenaufbau, der im wesentlichen aus ringförmigen, leicht zusammensetzbaren Teilen besteht, sondern man reduziert auch die Anzahl der Kanäle im Bypass-System dadurch, daß für den Eintritt des für die Steuerung nötigen Volumenanteiles in das Bypass-Kanalsystem nicht etwa ein einzelner Kanal, sondern die federnde Abdichtung gegenüber dem jeweils einer gegenüberliegenden Dämpfungsventilscheibe zugehörigen Arbeitsraum genutzt wird.

Hierzu ist eine besonders vorteilhafte Ausbildung so ausgeführt, daß die den Druckraum federnd gegenüber dem zugehörigen Arbeitsraum abdichtenden elastischen Elemente bei einem unterhalb des Druckniveaus zur Öffnung der gegenüberliegenden und den jeweils anderen Arbeitsraum sperrenden Dämpfungsventilscheiben einen in dem gegenüberliegenden Druckraum auf die den Durchtrittskanälen abgewandte Seite der den jeweils anderen Arbeitsraum sperrenden Dämpfungsventilscheiben wirkenden Steuerstrom des Mediums freigeben.

Hierdurch wird auf einfache Weise und abhängig von dem im Bypass-Kanalsystem eingestellten Drosselungseffekten eine Ansteuerung der jeweils gegenüberliegenden Dämpfungsventilscheibe erreicht, wobei bereits zu Beginn jegliche Kolbenbewegung ein ausreichender Steuerdruck zur Verfügung steht, der auch bei eventueller Umkehr der Bewegungsrichtung und geschlossenem Steuerschieber erhalten bleibt.

Hierzu ist es vorteilhaft, daß die elastischen Elemente als topfförmige, im Kolbenkörper gelagerte und die Dämpfungsventilscheibe, hier im allgemeinen deren äußeren Rand belastende Federringe ausgebildet sind.

Solche topfförmigen Ringe lassen sich sehr leicht herstellen und in ihren Federungseigenschaften beliebig einstellen.

Gleichermaßen einfach herstellbar und einstellbar ist eine Ausbildung der elastischen Elemente als gekröpfte, im Kolbenkörper gelagerte und die Dämpfungsventilscheibe belastende Tellerfedern.

Für Ausbildungen von Proportionalventilen, die in axialer Richtung besonders platzsparend konstruiert sind, eigenen sich vorteilhafterweise elastische Elemente, welche als im Kolbenkörper gelagerte und die Dämpfungsventilscheibe belastende elastische Dichtungsringe ausgebildet sind.

Solche als elastische Dichtungsringe ausgebildete Elemente lassen sich auch in Verbindung mit vorgefertigten, ringförmigen Aufnahmekörpern herstellen, so daß die Montage weiterhin erleichtert wird.

Eine weitere vorteilhafte Ausbildung erreicht man dadurch, daß die elastischen Elemente als im Kolbenkörper gelagerte und die Dämpfungsventilscheibe belastende Metall-Nichtmetall-Verbundwerkstoffe ausgebildet sind. Solche Verbundwerkstoffe bestehen im wesentlichen aus einer Verbindung von Elastomeren oder Gummi und Metall.

Hierdurch ergibt sich in dem Zusammenwirken von Elementen unterschiedlicher Elastizität eine besonders weich einstellbare Dämpfungskennlinie.

In einer weiteren vorteilhaften Ausbildung sind die in die jeweiligen Arbeitsräume mündenden Austrittsöffnungen des Bypass-Kanalsystems mit einem einen Eintritt des Druckmediums aus dem jeweiligen Arbeitsraum in das Bypass-Kanalsystem verhinderndem Rückschlagventil versehen.

Solche separaten Rückschlagventile sind zum einen in ihrer Funktionsweise und in ihrer Montage sehr einfach und bilden mechanisch sichere und gegenüber hochfrequenten Schwingungen tolerante Dichtungselemente.

In einer weiteren vorteilhaften Ausbildung ist der den im Bypass-Kanalsystem vorhandenen Mediumsdurchfluß drosselnde elektromagnetisch betätigbare Steuerschieber als separates und in Fließrichtung vor den Rückschlagventilen sowohl in der Zug- als auch in der Druckstufe wirksames Steuerelement ausgebildet.

Durch eine solche Konstruktion wird die Drosselfunktion völlig getrennt gehalten von der Dichtfunktion der Rückschlagventile, und es ergibt sich ein von Unstetigkeiten freier Drosselvolumenstrom in einem genau definierten Kanalquerschnitt. Zudem kann hierdurch mit lediglich einem elektromagnetisch betätigbaren Steuerschieber eine Steuerung für beide Bewegungsrichtungen, d.h. für die Zug- und die Druckstufe, vorgenommen werden. Dies wiederum verringert in einem weiteren Schritt die Baugröße des Kolbens und vereinfacht die Gesamtkonstruktion.

Anhand einiger Ausführungsbeispiele soll die Erfindung näher verdeutlicht werden. Es zeigen
- Fig. 1: ein erfindungsgemäß ausgebildetes Proportionalventil mit einem als topfförmiger Federring ausgebildeten elastischen Elemenet
- Fig. 2: ein erfindungsgemäßes Proportionalventil mit einem als gekröpfte Tellerfeder ausgebildeten elastischen Element.

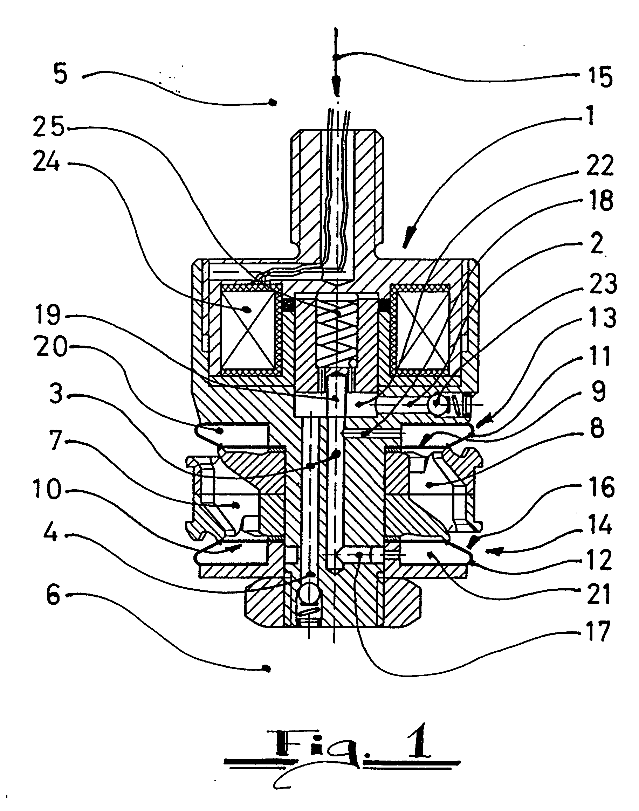

In der Fig. 1 erkennt man den Kolben 1 mit seinem u.a. aus den Kanälen 2, 3 und 4 bestehenden Bypass-Kanalsystem.

Der Kolben gleitet in einen hier nicht näher dargestellten Zylinder und trennt die beiden Arbeitsräume 5 und 6.

Der Kolben weist in seinem Grundkörper Durchtrittskanäle 7 und 8 auf, welche den Hauptstrom des Dämpfungsmediums auf die Dämpfungsventilscheiben 9 und 10 leiten, welche zusammen mit den topfförmig ausgebildeten elastischen Elementen 11 und 12 die druckabhängigen Dämpfungsventile 13 und 14 bilden.

In der Druckstufenbewegungsrichtung 15 des Kolbens, welche hier exemplarisch dargestellt ist, hebt der Mediumsdruck im Arbeitsraum 6 zunächst den nach innen gebogenen Topfkragen 16 des elastischen Elementes 12 und strömt durch die Bohrung 17 sowie durch den Kanal 3 und die Bohrung 18 bei den Steuerstrom drosselndem Steuerschieber 19 in den Druckraum 20 und baut dort einen Gegendruck zu dem Hauptstrom des Dämpfungsmediums auf, welcher durch den Kanal 8 strömt und auf die Dämpfungsventilscheibe 9 wirkt.

Ein weiteres Öffnen des Steuerschiebers 19 bewirkt einen Druckabbau im Druckraum 20, da dann der Steuerstrom durch den Kanal 3 über den Steuerraum 22, den Kanal 2 und über das Rückschlagventil 23 in den gegenüberliegenden Arbeitsraum 5 abströmen kann.

Angesteuert wird der Steuerschieber durch die Elektromagneten 24, wobei eine Feder 25 für eine Grundstellung und Sperrung des Steuerschiebers 19 sorgt.

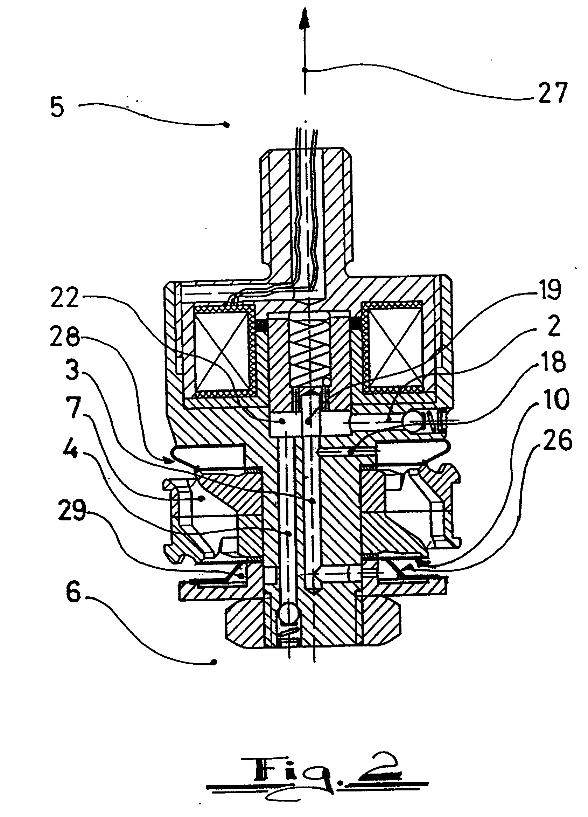

Die Fig. 2 zeigt eine Ausführung mit einem als gekröpfte Tellerfeder 26 ausgebildeten elastischen Federelement auf der unteren Seite.

In der hier dargestellten Bewegungsrichtung 27, d.h. in der Zugstufe des Kolbens, strömt der Steuervolumen-Anteil zunächst unter Öffnen des einwärts gebogenen Topfkragens des topfförmigen oberen elastischen Elementes 28 und gedrosselt durch den Steuerschieber 19 durch die Kanäle und Bohrungen 18, 3, 22 und 4 des Kanalsystems, bevor es den Druckraum 29 erreicht, wo mit Hilfe des als gekröpfte Tellerfeder 26 ausgebildeten unteren elastischen Elementes ein Gegendruck zu dem durch den Kanal 7 geleiteten Hauptstrom des Dämpfungsmediums auf die Dämpfungsventilscheibe 10 ausgeübt wird.

### Bezugszeichenliste

- 1: Kolben
- 2,3,4: Kanal
- 5, 6: Arbeitsraum
- 7, 8: Durchtrittskanal
- 9, 10: Dämpfungsventilscheibe
- 11, 12: elastisches Element
- 13, 14: druckabhängiges Dämpfungsventil
- 15: Bewegungsrichtung i.d. Druckstufe
- 16: Topfkragen / topfförmiger Federring
- 17, 18: Bohrung
- 19: Steuerschieber
- 20, 21: Druckraum
- 22: Steuerraum
- 23: Rückschlagventil
- 24: Elektromagnet
- 25: Feder
- 26: gekröpfte Tellerfeder
- 27: Bewegungsrichtung i.d. Zugstufe
- 28: Topfkragen / topfförmiger Federring
- 29: Druckraum

## Patentansprüche

1. Proportionalventil für einen hydraulischen Schwingungsdämpfer mit einem in einem Dämpfungszylinder axial verschieblich geführten und mit einer Kolbenstange verbundenen Kolben (1), wobei der Kolben (1) druckabhängige Dämpfungsventile (13,14) für einen Austausch von Dämpfungsflüssigkeit in der Zug- und in der Druckstufe aufweist und den Dämpfungszylinder in zwei Arbeitsräume (5,6) unterteilt, und bei dem Durchtrittskanäle (7,8) vorhanden sind, durch welche das die Dämpfungsventile (13,14) beaufschlagende Druckmedium strömt, und wobei der Kolben (1) einen in einem Bypass-Kanalsystem (2,3,4) angeordneten und den dort vorhandenen Mediumsdurchfluß drosselnden elektromagnetisch betätigbaren Steuerschieber (19) aufweist, wobei die den Durchtrittskanälen (7,8) abgewandte Seite des Dämpfungsventiles einen über das Bypass-Kanalsystem (2,3,4) mit dem jeweils gegenüberliegenden Arbeitsraum verbundenen Druckraum (20,21) aufweist, und bei dem der Druckraum (20,21) federnd gegenüber dem zugehörigen Arbeitsraum (5,6) abgedichtet ist,
**dadurch gekennzeichnet,** daß der Druckraum (20,21) durch die Dämpfungsventilscheibe (9,10), durch ein zur federnden Abdichtung gegenüber dem zugehörigen Arbeitsraum (5,6) dienendes elastisches Element (11,12) und durch die die Mündungsöffnungen des Bypass-Kanalsystems (2,3,4) enthaltenden Wandungsteile des Kolbenkörpers und /oder von Kolbeneinsatzringen begrenzt wird, wobei das elastische Element (11,12) des zum jeweils gegenüberliegenden Arbeitsraum (5,6) gehörigen Druckraumes (20,21) durch einen im gegenüberliegenden Arbeitsraum (5,6) auftretenden Mediumsdruck geöffnet wird.

2. Proportionalventil für einen hydraulischen Schwingungsdämpfer nach Anspruch 1,
**dadurch gekennzeichnet,**
daß die den Druckraum (20,21) federnd gegenüber dem zugehörigen Arbeitsraum (5,6) abdichtenden elastischen Elemente (11,12) bei einem unterhalb des Druckniveaus zur Öffnung der gegenüberliegenden und den jeweils anderen Arbeitsraum (5,6) sperrenden Dämfungsventilscheiben (9,10) einen in dem gegenüberliegenden Druckraum (20,21) auf die den Durchtrittskanälen (7,8) abgewandte Seite der den jeweils anderen Arbeitsraum (5,6) sperrenden Dämfungsventilscheiben (9,10) wirkenden Steuerstrom des Mediums freigeben.

3. Proportionalventil für einen hydraulischen Schwingungsdämpfer nach einem der vorhergehenden Ansprüche,
**dadurch gekennzeichnet,**
daß die elastischen Elemente als topfförmige, im Kolbenkörper gelagerte und die Dämpfungsventilscheibe (9,10) belastende Federringe ausgebildet sind.

4. Proportionalventil für einen hydraulischen Schwingungsdämpfer nach einem der vorhergehenden Ansprüche,
**dadurch gekennzeichnet,**
daß die elastischen Elemente als gekröpfte, im Kolbenkörper gelagerte und die Dämpfungsventilscheibe (10) belastende Tellerfedern (26) ausgebildet sind.

5. Proportionalventil für einen hydraulischen Schwingungsdämpfer nach einem der vorhergehenden Ansprüche,
**dadurch gekennzeichnet,**
daß die elastischen Elemente als im Kolbenkörper gelagerte und die Dämpfungsventilscheibe belastende elastische Dichtungsringe ausgebildet sind.

6. Proportionalventil für einen hydraulischen Schwingungsdämpfer nach einem der vorhergehenden Ansprüche,
**dadurch gekennzeichnet,**
daß die elastischen Elemente als im Kolbenkörper gelagerte und die Dämpfungsventilscheibe belastende Metall-Nichtmetall-Verbundwerkstoffe ausgebildet sind.

7. Proportionalventil für einen hydraulischen Schwingungsdämpfer nach einem der vorhergehenden Ansprüche,
**dadurch gekennzeichnet,**
daß die in die jeweiligen Arbeitsräume (5,6) mündenden Austrittsöffnungen des Bypass-Kanalsystems (2,3,4) mit einem einen Eintritt des Druckmediums aus dem jeweiligen Arbeitsraum (5,6) in das Bypass-Kanalsystem (2,3,4) verhinderndem Rückschlagventil (23) versehen sind.

8. Proportionalventil für einen hydraulischen Schwingungsdämpfer nach einem der vorhergehenden Ansprüche,
**dadurch gekennzeichnet,**
daß der den im Bypass-Kanalsystem (2,3,4) vorhandenen Mediumsdurchfluß drosselnde elektromagnetisch betätigbare Steuerschieber (19) als separates und in Fließrichtung vor den Rückschlagventilen (23) sowohl in der Zug- als auch in der Druckstufe wirksames Steuerelement ausgebildet ist.

## Claims

1. Proportional valve for a hydraulic oscillation damper with a piston (1) displaceably guided in an axial manner in a damping cylinder and connected to a piston rod, wherein the piston (1) comprises pressure dependent damping valves (13, 14) for an exchange of damping liquid in the drawing and compression stages and divides the damping cylinder into two working chambers (5, 6), and in which through-channels (7, 8) are provided through which the pressure medium acting upon the damping valves (13, 14) flows, and wherein the piston (1) comprises a control slide (19) which is disposed in a bypass channel system (2, 3, 4) and can be electromagnetically actuated so as to throttle the through-flow of the medium at this point, wherein the side of the damping valve remote from the through-channels (7, 8) comprises a pressure chamber (20, 21) connected by way ofthe bypass channel system (2, 3, 4) to the respectively opposite working chamber, and in which the pressure chamber (20, 21) is sealed in a resilient manner with respect to the associated working chamber (5, 6),
characterised in that
the pressure chamber (20, 21) is defined by the damping valve disc (9, 10), by an elastic element (11, 12) serving to provide a resilient seal with respect to the associated working chamber (5, 6), and by the wall parts ofthe piston body containing the mouth openings ofthe bypass channel system (2, 3, 4), and/or by piston insert rings, wherein the elastic element (11, 12) ofthe pressure chamber (20, 21) allocated to the respectively opposite working chamber (5, 6) is opened by pressure in the medium arising in the opposite working chamber (5, 6).

2. Proportional valve for a hydraulic oscillation damper according to claim 1,
characterised in that
the elastic elements (11, 12), which seal the pressure chamber (20, 21) in a resilient manner with respect to the associated working chamber (5, 6), in the case of a [...] below the pressure level for opening the opposite damping valve discs (9, 10) shutting offthe respective other working chamber (5, 6), release a control flow of the medium which acts, in the opposite pressure chamber (20, 21), on the side, remote from the through-channels (7, 8), of the damping valve discs (9, 10) shutting offthe respective other working chamber (5, 6).

3. Proportional valve for a hydraulic oscillation damper according to one of the preceding claims,
characterised in that
the elastic elements are formed as cup-shaped resilient rings mounted in the piston body and loading the damping valve disc (9, 10).

4. Proportional valve for a hydraulic oscillation damper according to one of the preceding claims,
characterised in that
the elastic elements are formed as angle-bent plate springs (26) mounted in the piston body and loading the damping valve disc (10).

5. Proportional valve for a hydraulic oscillation damper according to one of the preceding claims,
characterised in that
the elastic elements are formed as elastic sealing rings mounted in the piston body and loading the damping valve disc.

6. Proportional valve for a hydraulic oscillation damper according to one of the preceding claims,
characterised in that
the elastic elements are formed as metal-non-metal composite materials mounted in the piston body and loading the damping valve disc.

7. Proportional valve for a hydraulic oscillation damper according to one of the preceding claims,
characterised in that
the outlet openings of the bypass channel system (2, 3, 4) issuing into the respective working chambers (5, 6) are provided with a non-return valve (23) preventing an inlet of the pressure medium from the respective working chamber (5, 6) into the bypass channel system (2, 3, 4).

8. Proportional valve for a hydraulic oscillation damper according to one of the preceding claims,
characterised in that
the electromagnetically actuatable control slide (19) throttling the through-flow of medium provided in the bypass channel system (2, 3, 4) is formed as a separate control element which acts in the flow direction in advance ofthe non-return valves (23) and in the drawing as well as in the compression stage.

## Revendications

1. Clapet proportionnel pour un amortisseur de vibrations hydraulique qui comporte un piston (1) guidé de manière à pouvoir coulisser axialement dans un cylindre d'amortissement et relié à une tige de piston, dans lequel le piston (1) présente des clapets d'amortissement (13, 14) actionnés par la pression, en vue d'un échange de fluide d'amortissement lors de la course d'extension et de la course de compression, et divise le cylindre d'amortissement en deux chambres de travail (5, 6), et dans lequel il existe des canaux de passage (7, 8) par lesquels s'écoule le fluide sous pression commandant les clapets d'amortissement (13, 14), et dans lequel le piston (1) présente un tiroir de commande (19) actionné électromagnétiquement, disposé dans un système de canaux de dérivation (2, 3, 4) et étranglant le débit de fluide à cet endroit, dans lequel le côté du clapet d'amortissement opposé aux canaux de passage (7, 8) présente une chambre de pression (20, 21) reliée par le système de canaux de dérivation (2, 3, 4) à la chambre de travail chaque fois opposée, et dans lequel la chambre de pression (20, 21) est étanchée de manière élastique par rapport à la chambre de travail (5, 6) associée,
caractérisé en ce que la chambre de pression (20, 21) est délimitée par les disques (9, 10) du clapet d'amortissement, par un élément élastique (11, 12) servant de joint d'étanchéité élastique vis à vis de la chambre de travail (5, 6) associée, et par les parties de paroi du corps de piston qui contiennent les embouchures du système de canaux de dérivation (2, 3, 4) et/ou des bagues de garniture du piston, dans lequel l'élément élastique (11, 12) de la chambre de pression (20, 21) appartenant à la chambre de travail (5, 6) chaque fois opposée est ouvert par l'intermédiaire d'une pression de fluide apparaissant dans la chambre de travail (5, 6) opposée.

2. Clapet proportionnel pour un amortisseur hydraulique de vibrations selon la revendication 1
caractérisé en ce que, pour un écoulement de commande du fluide situé en dessous du niveau de pression assurant l'ouverture des disques de clapet d'amortissement (9, 10) opposés et fermant chaque fois l'autre chambre de travail (5, 6), les éléments élastiques (11, 12) assurant élastiquement l'étanchéité de la chambre de pression (20, 21) par rapport à la chambre de travail (5, 6) associée, libèrent un écoulement de commande du fluide agissant, dans la chambre de pression (20, 21) opposée, sur le côté, opposé aux canaux de passage (7, 8), des disques du clapet d'amortissement (9, 10) fermant chaque fois l'autre chambre de travail (5, 6).

3. Clapet proportionnel pour un amortisseur de vibrations hydraulique selon l'une des revendications précédentes, caractérisé en ce que les éléments élastiques sont configurés comme des bagues élastiques en forme de cuvette, montées dans le corps du piston et chargeant le disque de clapet d'amortissement (9, 10).

4. Clapet proportionnel pour un amortisseur de vibrations hydraulique selon l'une des revendications précédentes, caractérisé en ce que les éléments élastiques sont configurés comme ressorts Belleville (26), ondulés, montés dans le corps de piston et chargeant le disque de clapet d'amortissement.

5. Clapet proportionnel pour un amortisseur de vibrations hydraulique selon l'une des revendications précédentes, caractérisé en ce que les éléments élastiques sont configurés comme bagues élastiques d'étanchéité, montées dans le corps du piston et chargeant le disque du clapet d'amortissement (10).

6. Clapet proportionnel pour un amortisseur de vibrations hydraulique selon l'une des revendications précédentes, caractérisé en ce que les éléments élastiques sont configurés comme matériaux composites métal-non métal, montés dans le corps du piston et chargeant le disque du clapet d'amortissement.

7. Clapet proportionnel pour un amortisseur de vibrations hydraulique selon l'une des revendications précédentes, caractérisé en ce que les ouvertures de sortie, débouchant dans la chambre de travail (5, 6) correspondante, du système de canaux de dérivation (2, 3, 4) sont dotées d'un clapet anti-retour (23) empêchant le fluide sous pression provenant de la chambre de travail (5, 6) correspondante de pénétrer dans le système de canaux de dérivation (2, 3,4).

8. Clapet proportionnel pour un amortisseur de vibrations hydraulique selon l'une des revendications précédentes, caractérisé en ce que le tiroir de commande (19) actionné électromagnétiquement, qui étrangle le débit de fluide dans le système de canaux de dérivation (2, 3, 4), est configuré comme élément de commande séparé et agissant, dans la direction de l'écoulement, en avant des clapets anti-retour (23), tant lors de la course d'extension que lors de la course de compression.
